# FASCICULE DE BREVET EUROPEEN

(11) **EP 3 898 544 B1**
(45) Date de publication et mention de la délivrance du brevet: **30.07.2025**
(21) Numéro de dépôt: 19848868.6
(22) Date de dépôt: 18.12.2019
(51) Int. Cl.: C03C 17/34

(54) **VITRAGE DE CONTROLE SOLAIRE COMPRENANT DEUX COUCHES A BASE DE NITRURE DE TITANE**
SONNENSCHUTZVERGLASUNG MIT ZWEI SCHICHTEN AUF DER BASIS VON TITANNITRID
SOLAR-CONTROL GLAZING COMPRISING TWO LAYERS BASED ON TITANIUM NITRIDE

(30) Priorité: 21.12.2018 FR 1873764
(43) Date de publication de la demande: 27.10.2021
(73) Titulaire: Saint-Gobain Glass France, 92400 Courbevoie (FR)
(72) Inventeur: REYMOND, Vincent, 92160 ANTONY (FR); MONMEYRAN, Corentin, 93340 LE RAINCY (FR); SINGH, Laura Jane, 75019 PARIS (FR)
(74) Mandataire: Saint-Gobain Recherche
(86) Numéro de dépôt international: PCT/FR2019/053151
(87) Numéro de publication internationale: WO 2020/128327

(56) Documents cités:
- US-A- 5 091 244
- US-A- 5 216 542
- US-A1- 2018 186 691

## Description

L'invention concerne les vitrages isolants dits de contrôle solaire, munis d'empilements de couches minces dits fonctionnels, c'est-à-dire agissant sur le rayonnement solaire et/ou thermique essentiellement par réflexion et/ou absorption du rayonnement infrarouge proche (solaire) ou lointain (thermique). L'application plus particulièrement visée par l'invention est en premier lieu les vitrages de véhicules, comme les verres latéraux, les toits-autos, les lunettes arrières. Sans sortir du cadre de l'invention le présent vitrage peut également être utilisé dans le domaine du bâtiment, en tant que vitrage de contrôle solaire.

On entend par couche «fonctionnelle» ou encore «active», au sens de la présente demande, les couches de l'empilement qui confèrent à l'empilement l'essentiel de ses propriétés d'isolation thermique. Le plus souvent les empilements en couches minces équipant le vitrage lui confèrent des propriétés sensiblement améliorées d'isolation très essentiellement par les propriétés intrinsèques desdites couches actives. Lesdites couches agissent sur le flux de rayonnement infrarouge thermique traversant ledit vitrage, par opposition aux autres couches, généralement en matériau diélectrique et ayant le plus souvent principalement pour fonction une protection chimique ou mécanique desdites couches fonctionnelles. Par matériau diélectrique, on entend un matériau dont la forme massive et dénuée d'impuretés présente une forte résistivité, notamment une résistivité initialement supérieure 10¹⁰ ohms.mètres (Ω.m).

De tels vitrages munis d'empilements de couches minces agissent sur le rayonnement solaire incident soit essentiellement par l'absorption du rayonnement incident par la ou les couches fonctionnelles, soit essentiellement par réflexion par ces mêmes couches.

Ils sont regroupés sous la désignation de vitrage de contrôle solaire. Ils sont commercialisés et utilisés essentiellement :
- soit pour assurer essentiellement une protection de l'habitacle (automobile) ou de l'habitation du rayonnement solaire et en éviter une surchauffe, de tels vitrages étant qualifiés dans le métier d'antisolaire,
- soit essentiellement pour assurer une isolation thermique de l'habitation et éviter les déperditions de chaleur, ces vitrages étant qualifiés de vitrages isolants.

Par antisolaire, on entend ainsi au sens de la présente invention la faculté du vitrage de limiter le flux énergétique, en particulier le rayonnement Infrarouge solaire (IRS) le traversant depuis l'extérieur vers l'intérieur de l'habitation ou de l'habitacle.

Par isolant thermique, on entend un vitrage muni d'au moins une couche fonctionnelle lui conférant une déperdition énergétique diminuée, ladite couche présentant des propriétés de réflexion du rayonnement IR compris entre 5 et 50 micromètres. Les couches fonctionnelles utilisées dans cette fonction présentent un coefficient de réflexion du rayonnement IR élevé et sont dites bas-émissives (ou low-e selon le terme anglais), cf. par exemple US 2018/186691 ou US 5 091 244.

Dans certains pays, les normes impliquent que les vitrages présentent des propriétés à la fois antisolaire et d'isolation thermique pour les vitrages de bâtiment. Dans une autre application comme l'automobile, il est parfois recherché de limiter la quantité de chaleur entrant dans l'habitacle du véhicule ou dans le bâtiment, c'est-à-dire limiter la transmission énergétique du rayonnement solaire au travers du vitrage.

D'une manière générale, toutes les caractéristiques lumineuses et thermiques présentées dans la présente description sont obtenues selon les principes et méthodes décrits dans les normes internationales ISO 9050 (2003) et ISO 10292 (1994), se rapportant respectivement à la détermination des caractéristiques lumineuses et énergétiques des vitrages utilisés dans le verre pour la construction. Selon un autre aspect qui peut également être pris en compte dans certaines applications, lorsqu'ils sont associés au substrat verrier, les revêtements doivent en outre également être esthétiquement plaisants, c'est-à-dire que le vitrage muni de son empilement doit présenter une colorimétrie, notamment en réflexion interne suffisamment neutre pour ne pas incommoder les passagers du véhicule ou les habitants du bâtiment dans le système de colorimétrie CIE LAB (L*, a*, b*). En particulier, des valeurs du coefficient a* doivent être proches de 0 pour que la couleur soit considérée comme suffisamment neutre. En particulier, des valeurs trop importantes du coefficient a* en réflexion interne, c'est-à-dire du côté de l'empilement (noté a*_{c} dans la suite de la description), traduise une coloration intense du vitrage et sont à proscrire, plus particulièrement dans le domaine de l'automobile. On cherchera préférentiellement, dans un tel but, à obtenir des articles verriers dans lesquels le paramètres a*_{c} est compris entre -10 et 10, voire entre -5 et 5.

Les revêtements sont de façon classique déposés par des techniques de dépôt du type pulvérisation sous vide assistée par champ magnétique d'une cathode du matériau ou d'un précurseur du matériau à déposer, souvent appelée technique de pulvérisation magnétron dans le domaine. Une telle technique est aujourd'hui classiquement utilisée notamment lorsque le revêtement à déposer est constitué d'un empilement plus complexe de couches successives d'épaisseurs de quelques nanomètres ou quelques dizaines de nanomètres.

Les empilements les plus performants commercialisés à l'heure actuelle pour résoudre les problèmes précédents et déposés par les techniques de pulvérisation magnétron incorporent une couche métallique du type Argent fonctionnant essentiellement sur le mode de la réflexion d'une majeure partie du rayonnement IR (infrarouge) incident. Ces empilements sont ainsi utilisés principalement en tant que vitrages du type bas émissifs (ou low-e en anglais) pour l'isolation thermique des bâtiments. Ces couches sont cependant très sensibles à l'humidité et sont donc exclusivement utilisées dans des doubles vitrages, en face 2 ou 3 de celui-ci, pour être protégées de l'humidité. Les empilements selon l'invention ne comprennent pas de telles couches du type argent, ou encore du type or ou platine ou encore cuivre. D'une manière plus générale, les empilements selon l'invention ne contiennent pas de tels métaux précieux, ou alors en quantités très négligeables, notamment sous formes d'impuretés inévitables.

La mise au point de nouveaux empilements est rendue nécessaire par certaines applications ou dispositions spécifiques.

Il est notamment recherché actuellement des vitrages procurant en outre un confort visuel amélioré, notamment dans le domaine de l'automobile (comme vitrage latéral, vitrage de lunette arrière ou encore comme toit vitré). L'un des objets de la présente invention pour répondre à une telle demande et de fournir des vitrages isolants thermiques adaptés pour que les passagers du véhicule ou les occupants du bâtiment équipé desdits vitrages ne soit pas ou peu visibles depuis l'extérieur à la lumière du jour mais puissent de leur côté voir sans aucune gêne l'environnement extérieur.

En outre, pour certaines applications particulières telles que l'automobile un objet supplémentaire de l'invention est de fournir des vitrages répondants aux critères précédents et dont la couleur en réflexion interne est relativement neutre, en particulier dont le coefficient a* en réflexion interne (a*_{c}) est compris entre -10 et 10, voire entre -5 et 5.

Selon les résultats obtenus par la société déposante, les problèmes précédents ont été résolus par des articles verriers tels que décrits maintenant :
Selon un premier aspect, la présente invention se rapporte à un vitrage de véhicule ou de bâtiment, avec des propriétés de contrôle solaire, comprenant au moins un substrat verrier supportant un empilement de couches, dans lequel l'empilement comprend (ou est constitué par) successivement depuis la surface dudit substrat : un premier module M₁, constitué par une ou plusieurs couche(s) à base de matériaux diélectriques, d'épaisseur totale *e₁*, une première couche TN₁ comprenant du nitrure de titane d'épaisseur comprise entre 5 nanomètres (nm) et 35 nanomètres, un second module M₂, constitué par une ou plusieurs couche(s) à base de matériaux diélectriques, d'épaisseur totale *e₂*, une seconde couche TN₂ comprenant du nitrure de titane d'épaisseur comprise entre 5 nm et 35 nm, un troisième module M₃, constitué par une ou plusieurs couche(s) à base de matériaux diélectriques, d'épaisseur totale *e₃,* dans lequel la somme cumulée des épaisseurs des couches TN₁ et TN₂ comprenant du nitrure de titane est supérieure à 30 nm, dans lequel *e₁* est inférieure à 30 nanomètres, *e₂* est compris entre 10 nm et 100 nm, *e₃* est supérieur à 10 nm nanomètres et inférieure ou égale à 65 nm, dans lequel le rapport des épaisseurs *e₁*/*e₃* est inférieur à 0,6.

Il a été découvert que de tels articles, présentant notamment une réflexion lumineuse du côté de l'empilement de couches (R_{Lc}) inférieure à 5% et une différence entre la transmission lumineuse et la R_{Lc} inférieure à 30% (la mesure étant effectuée sur un verre monolithique clair sur lequel est disposé l'empilement décrit précédemment) permettait efficacement de résoudre le problème technique décrit précédemment.

Selon des modes de réalisations préférés de la présente invention, qui peuvent bien évidemment être combinés le cas échéant entre eux :
- L'épaisseur *e₂* du second module M₂ est comprise entre 20 nm et 65 nm bornes incluses, de préférence est comprise entre 25 nm et 60 nm, bornes incluses.
- L'épaisseur *e₁* du premier module M₁ est inférieure à 25 nm, en particulier comprise entre 1 nm et 25 nanomètres, bornes comprises, de préférence entre 4 nm et 20 nanomètres, bornes incluses.
- L'épaisseur *e₃* du troisième module M₃ est comprise entre 20 nm et 65 nanomètres, bornes comprises, de préférence est comprise entre 25 nm et 60 nanomètres, bornes incluses et de manière très préférée est comprise entre 30 nm et 50 nanomètres, bornes incluses.
- L'épaisseur TN₁ de la première couche à base de nitrure de titane est comprise entre 10 nm et 30 nanomètres, bornes comprises, de préférence entre 15 nm et 25 nanomètres bornes incluses.
- L'épaisseur TN₂ de la seconde couche à base de nitrure de titane est comprise entre 10 nm et 30 nanomètres, bornes comprises.
- L'épaisseur cumulée TN₁ + TN₂ des premières couches à base de nitrure de titane et seconde couche à base de nitrure de titane est inférieure à 60 nm, de préférence est inférieure à 55 nm.
- Le rapport des épaisseurs *e₁*/*e₃* est inférieur à 0,55.
- Le revêtement ne contient pas de couche à base d'argent ou d'or.
- Les modules M₁, M₂ et de préférence M₃ comprennent du nitrure de silicium, sous la forme d'une couche unique ou d'un ensemble de couches dont au moins une couche comprenant du nitrure de silicium.
- M₁ comprend une couche comprenant du nitrure de silicium.
- M₂ comprend une couche comprenant du nitrure de silicium.
- M₃ comprend une couche comprenant du nitrure de silicium.
- Le ou les modules M₁, M₂ ou M₃ comprennent des matériaux choisis parmi un nitrure de silicium, un nitrure d'aluminium, un oxyde d'étain, un oxyde mixte de zinc et d'étain, un oxyde de silicium, un oxyde de titane, un oxynitrure de silicium.
- M₁ et M₂ sont des couches uniques.
- M₁ et M₂ et M₃ sont des couches uniques.
- M₁ et M₂ sont à base de nitrure de silicium.
- M₁, M₂ et M₃ sont à base de nitrure de silicium.
- M₂ est une couche unique à base de nitrure de silicium ou est constituée essentiellement de nitrure de silicium et est au contact direct des couches TN₁ et TN₂ à base de nitrure de titane.
- Le substrat verrier sur lequel est déposé l'empilement est en verre clair.
- Ledit revêtement comprend et de préférence est constitué par la succession de couches suivantes, à partir de la surface du substrat :
   - une première couche M₁ à base de nitrure de silicium d'épaisseur *e₁* de préférence comprise entre 1 nm et 25 nm, de préférence entre 4 nm et 20 nm,
   - une première couche comprenant du nitrure de titane, d'épaisseur comprise entre 10 nm et 30 nanomètres,
   - une seconde couche M₂ à base de nitrure de silicium, d'épaisseur *e₂* comprise entre 20 nm et 65 nm, de préférence comprise entre 25 nm et 60 nm,
   - une seconde couche comprenant du nitrure de titane, d'épaisseur comprise entre 10 et 30 nanomètres,
   - une troisième couche unique M₃ à base de nitrure de silicium d'épaisseur *e₃* supérieure à 10 nm, notamment comprise entre 20 nm et 65 nanomètres, de préférence comprise entre 25 nm et 60 nm, ou un ensemble de couches diélectriques M₃, dont au moins une couche à base de nitrure de silicium d'épaisseur supérieure à 10 nm, notamment comprise entre 25 nm et 60 nanomètres.
- Le vitrage comprend deux substrats verriers assemblés par un feuillet thermoplastique, ledit vitrage étant muni dudit empilement de couches, ledit empilement étant disposé de préférence sur la face d'un substrat tournée vers une surface extérieure dudit vitrage.
- Le vitrage précédent comprend un premier substrat verrier, de préférence coloré dans sa masse, lié à un deuxième substrat par un feuillet thermoplastique intermédiaire, notamment en PVB, ledit deuxième substrat étant en verre clair et muni dudit empilement de couches disposé de préférence sur sa face exposée vers l'extérieur dudit vitrage. Par coloré dans sa masse, on entend que le substrat comprend dans sa composition de verre des éléments visant à lui conférer une coloration (i.e. différente de celle d'un verre dit « clair »), notamment des éléments tels que le cobalt, le fer, le sélénium, voire le chrome, qui peuvent également viser à en diminuer la transmission lumineuse.
- Le ou lesdits substrats verriers sont trempés ou bombés.

De préférence, les couches de nitrure de titane sont à base de nitrure de titane ou de préférence encore sont constituées essentiellement de nitrure de titane.

Des couches à base de titane selon l'invention comprennent par exemple plus de 50% poids de nitrure de titane, de préférence plus de 80% ou même plus de 90% poids de nitrure de titane.

Le nitrure de titane selon l'invention n'est pas nécessairement stœchiométrique (ratio atomique Ti/N de 1) mais peut être sur- ou sous-stœchiométrique. Selon un mode avantageux, le ratio N/Ti est compris entre 1 et 1,2. Egalement, le nitrure de titane selon l'invention peut comprendre une quantité mineure d'oxygène, par exemple entre 1 et 10% molaire d'oxygène, notamment entre 1 et 5% molaire d'oxygène.

Selon un mode particulièrement préféré, les couches en nitrure de titane selon l'invention répondent à la formule générale TiNₓO_{y}, dans laquelle 1,00 < x < 1,20 et dans laquelle 0,01 < y < 0,10.

Les matériaux diélectriques, une fois déposés en couches minces, peuvent cependant comprendre des éléments supplémentaires augmentant sensiblement leur conductivité électrique, utiles par exemple pour améliorer le rendement de pulvérisation cathodique du matériau précurseur constituant la cible magnétron. Les couches diélectriques des modules M₁, M₂ et M₃ selon l'invention peuvent être des couches à base d'un matériau choisi parmi un nitrure de silicium, un nitrure d'aluminium, un oxyde d'étain, un oxyde mixte de zinc ou d'étain, un oxyde de silicium, un oxyde de titane, un oxynitrure de silicium. De préférence les modules M₁, M₂ et M₃ sont constitués d'une couche unique et cette couche est à base de nitrure de silicium ou est constituée essentiellement de nitrure de silicium. Un matériau à base de nitrure de silicium, d'oxyde d'étain, d'oxyde mixte de zinc et d'étain, d'oxyde de silicium, d'oxyde de titane, d'oxynitrure de silicium est par exemple un matériau constitué majoritairement, par exemple pour plus de 50% poids, de préférence pour plus de 80% ou même plus de 90% poids, d'un tel composé mais pouvant également néanmoins contenir d'autres éléments minoritaires, en particulier en substitution des cations, en particulier pour en favoriser le dépôt sous forme de couches minces par les techniques habituelles de la pulvérisation magnétron comme décrit précédemment. A titre d'exemple, les couches selon la présente invention en nitrure de silicium ou en oxynitrure de silicium, voire en oxyde de silicium, notamment celles déposées par magnétron, comprennent le plus souvent des éléments du type Al, Zr, B, etc., en des proportions pouvant aller par exemple jusqu'à 10% atomique ou même parfois jusqu'à 20% atomique, sur la base de la teneur de la couche en silicium. De même, les couches en oxyde de titane peuvent comprendre en substitution du titane d'autres cations métalliques tels que du zirconium, sans sortir du cadre de la présente invention. Le vitrage selon l'invention peut être un vitrage simple dans lequel l'empilement de couches minces étant disposé en face 2 du vitrage simple en numérotant les faces du substrat de l'extérieur vers l'intérieur du bâtiment ou de l'habitacle qu'il équipe. Selon une autre réalisation, notamment pour une utilisation dans le domaine automobile, le vitrage selon l'invention peut-être un vitrage feuilleté, comprenant deux substrats verriers assemblés par un feuillet thermoplastique, ledit vitrage étant muni d'un empilement de couches tel que décrit précédemment. De préférence l'empilement est déposé sur la face du substrat tournée vers l'intérieur du bâtiment ou de l'habitacle qu'il équipe.

Les substrats et vitrages précédemment décrits peuvent bien évidemment être trempés le cas échéant thermiquement et/ou bombés.

Un procédé de fabrication d'un vitrage selon l'invention comprend par exemple au moins les étapes suivantes :
- on introduit un substrat verrier dans un dispositif de pulvérisation cathodique,
- dans un premier compartiment on dépose au moins une sous-couche d'un matériau diélectrique,
- dans un compartiment ultérieur, on pulvérise une cible en titane au moyen d'un plasma généré à partir d'un gaz comprenant de l'azote,
- dans un compartiment ultérieur on dépose au moins une couche intermédiaire d'un matériau diélectrique,
- dans un compartiment ultérieur, on pulvérise une cible en titane au moyen d'un plasma généré à partir d'un gaz comprenant de l'azote,
- dans un compartiment ultérieur, on dépose au moins une surcouche d'un matériau diélectrique.

Par les termes «sous-couche» et «sur-couche», il est fait référence dans la présente description à la position respective desdites couches par rapport à la ou les couches fonctionnelles dans l'empilement, ledit empilement étant supporté par le substrat verrier. En particulier, lorsque l'empilement contient une sous couche unique et une surcouche unique, la sous-couche est la couche au contact du substrat verrier et la surcouche est la couche la plus externe de l'empilement, tournée à l'opposé du substrat.

Par le terme «couche intermédiaire», on désigne la ou les couches disposées entre deux couches fonctionnelles.

Par épaisseur d'une couche, on entend au sens de la présente invention l'épaisseur géométrique réelle de la couche, telle qu'elle peut être mesurée notamment par les techniques classiques de microscopie électronique ou autre.

L'invention et ses avantages sont décrits avec plus de détails, ci-après, au moyen des exemples non limitatifs ci-dessous, selon l'invention et comparatifs. Dans tous les exemples et la description, à moins qu'autrement spécifié, les épaisseurs données sont géométriques.

Tous les substrats sont en verre clair de 2 mm d'épaisseur de type Planiclear commercialisé par la société Saint-Gobain Glass France. Toutes les couches sont déposées de façon connue par pulvérisation cathodique assistée par champ magnétique (souvent appelé magnétron).

De façon bien connue, les différentes couches successives sont déposées dans les compartiments successifs du dispositif de pulvérisation cathodique, chaque compartiment étant muni d'une cible métallique spécifique en Si, Ti, choisie pour le dépôt d'une couche spécifique de l'empilement.

Plus précisément, les couches en nitrure de silicium sont déposées dans des compartiments du dispositif à partir d'une cible de silicium métallique (dopé avec 8% en masse d'aluminium), dans une atmosphère réactive contenant de l'azote. Les couches en nitrure de silicium contiennent donc également de l'aluminium. Les couches en nitrure de titane sont déposées dans d'autres compartiments du dispositif à partir d'une cible de titane pur métallique dans une atmosphère réactive contenant de l'azote et de l'argon.

Les conditions de dépôt par magnétron de telles couches sont techniquement bien connues dans le domaine.

Dans les exemples qui suivent, le substrat verrier a ainsi été recouvert successivement d'un empilement de couches comprenant deux couches fonctionnelles en nitrure de titane (notées par commodité TiN par la suite même si la stœchiométrie réelle de la couche n'est pas forcément celle-ci) et des sous-couche (première couche M₁), sur-couche (troisième couche M₃) et couche intermédiaire (seconde couche M₂) en nitrure de silicium (notées par commodité Si₃N₄ par la suite même si la stoechiométrie réelle de la couche n'est pas forcément celle-ci).

Les conditions de dépôt ont été ajustées selon les techniques classiques pour un dépôt magnétron pour l'obtention de différents empilements dont la succession de couches et leurs épaisseurs (en nanomètres nm) est reportée dans le tableau 1 qui suit :

**[Table 1]**

| Exemple | Si₃N₄ (M₁) | TiN (TN₁) | Si₃N₄ (M₂) | TiN (TN₂) | Si₃N₄ (M₃) | e₁/e₃ |
|---|---|---|---|---|---|---|
| Exemple 1 (Invention) | 15 | 21 | 49 | 29 | 40 | 0,37 |
| Exemple 2 (Invention) | 5 | 21 | 30 | 13 | 26 | 0,19 |
| Exemple 3 (Invention) | 20 | 23 | 54 | 27 | 37 | 0,54 |
| Exemple 4 (comparatif) | 39 | 16 | 53 | 35 | 65 | 0,60 |
| Exemple 5 (comparatif) | 14 | 20 | 59 | 24 | **8** | **1,75** |
| Exemple 6 (comparatif) | 4 | 18 | 35 | 12 | **8** | 0,50 |
| Exemple 7 (comparatif) | **38** | 8 | 70 | 21 | 45 | **0,85** |

### A-Mesure des caractéristiques des vitrages

Les caractéristiques thermique et optique des vitrages ont été mesurées selon les principes et normes suivants :

### 1°) Propriétés optiques :

Les mesures sont effectuées conformément à la norme européenne ISO 9050 (2003). Plus précisément, la transmission lumineuse T_{L} et la réflexion lumineuse du côté de l'empilement R_{Lc} sont mesurées entre 380 et 780 nm selon l'illuminant D₆₅.

Le paramètre a*_{c} (côté empilement en réflexion interne) est mesuré selon le modèle de colorimétrie (L, a*, b*).

### 2°) Propriétés thermiques :

Les propriétés d'isolation thermique du vitrage sont évaluées par la détermination de l'émissivité à incidence normale εₙ mesurée sur la face intérieure du substrat recouverte de l'empilement de couches, selon les conditions décrites dans la norme ISO 10292 (1994), annexe A.

Les valeurs de transmission lumineuse T_{L}, du a*_{c}, de réflexion R_{Lc} et de l'émissivité normale εₙ (en pourcentages) sont mesurées pour le vitrage muni de l'empilement.

### B-Résultats

Les résultats obtenus pour les vitrages monolithiques selon les exemples décrits précédemment sont regroupés dans le tableau 2 qui suit :

**[Table 2]**

| Exemple | R_{Lc} | a*_{c} | T_{L} | T_{L}- R_{Lc} | εₙ |
|---|---|---|---|---|---|
| 1 (inv.) | 2 | 1.5 | 21 | 19 | <0,35 |
| 2 (inv.) | 5 | 3 | 31 | 26 | <0,35 |
| 3 (inv.) | 3 | -2.1 | 21 | 18 | <0,35 |
| 4 (comp.) | **12** | 0 | 19 | 7 | <0,35 |
| 5 (comp.) | **20** | 4 | 21 | 11 | < 0,35 |
| 6 (comp.) | **12** | 2 | 32 | 20 | < 0,35 |
| 7 (comp.) | 3 | **-14** | 41 | **38** | <0,35 |

On observe que les vitrages simples obtenus selon l'invention (exemples 1 à 3) présentent une réflexion lumineuse très faible (inférieure à 5%) sans toutefois que la transmission lumineuse ne soit trop élevée comme le montre la relativement faible différence entre la T_{L} et la R_{Lc}. De telles caractéristiques rendent de tels vitrages aptes à une utilisation permettant une vision sans gêne de l'extérieur du véhicule pour les occupants du véhicule ou du bâtiment équipé de tels vitrages.

Les exemples 4 à 6 présentent une réflexion trop importante qui confère au vitrage un effet miroir indésirable dans l'application recherchée.

L'exemple 7 présente une différence entre la T_{L} et la R_{Lc} trop importante, qui ne garantit pas un confort visuel optimal, au sens précédemment décrit, notamment dans un usage automobile, comme décrit par la suite. En outre cette forte TL s'accompagne nécessairement d'une augmentation sensible de la transmission énergétique T_{E}, qui peut entraîner une surchauffe très rapide de l'habitacle dans des conditions de forte illumination.

L'exemple 7 présente en outre une valeur de son paramètre a*_{c} trop importante qui traduit une coloration intense du vitrage visible par les occupants, non désirée dans certaines applications, notamment dans le domaine automobile.

Selon les exemples complémentaires suivants dans lesquels on cherche à obtenir des toits vitrés pour automobile, les vitrages simples des exemples 1 à 7 sont assemblés avec un vitrage coloré dans sa masse et commercialisé par la société déposante sous la référence Venus VG10^{®} (de T_{L} d'environ 10%), d'épaisseur 2 mm. L'assemblage est obtenu au moyen d'un feuillet de polyvinylbutyral (PVB) non teinté d'épaisseur 0,38 mm, de telle façon que l'empilement de couches se retrouve du côté extérieur du vitrage feuilleté ainsi obtenu.

On mesure sur le vitrage feuilleté final les paramètres R_{Lc} et TL comme précédemment décrit. Les résultats sont reportés dans le tableau 3 ci-dessous :

**[Table 3]**

| Exemple | R_{Lc} | a*_{c} | T_{L} | εₙ |
|---|---|---|---|---|
| 1 (inv.) | 1 | 2 | 6 | <0,35 |
| 2 (inv.) | 4 | 3.5 | 9 | <0,35 |
| 3 (inv.) | 3 | -2 | 6 | <0,35 |
| 4 (comp.) | **13** | 0 | 5 | <0,35 |
| 5 (comp.) | **20** | 0 | 6 | < 0,35 |
| 6 (comp.) | **12** | 2 | 9 | < 0,35 |
| 7 (comp.) | 2 | **-18** | 12 | <0,35 |

Les caractéristiques optiques et énergétiques des vitrages selon l'invention reportées dans le tableau 3 sont idéales pour leur utilisation comme toit vitré pour un véhicule automobile et combinent de très faibles T_{L} et R_{Lc}. L'utilisation d'un vitrage selon les exemples 4 à 6 se traduit par une trop forte réflexion lumineuse. La T_{L} du vitrage de l'exemple 7, pour une telle application, apparaît un peu trop élevée.

Tout comme pour le vitrage monolithique, le vitrage feuilleté selon l'exemple 7 présente en outre une valeur de son paramètre a*_{c} trop importante qui traduit une forte coloration, non désirée dans certaines applications telles que le domaine automobile.

## Revendications

1. Vitrage de véhicule ou de bâtiment à propriétés de contrôle solaire comprenant au moins un substrat verrier muni d'un empilement de couches, dans lequel l'empilement comprend successivement depuis la surface dudit substrat :
- un premier module M₁ constitué par une couche à base d'un matériau diélectrique d'épaisseur *e₁* ou par un ensemble de couches à base de matériaux diélectriques d'épaisseur cumulée *e₁*,
- une première couche TN₁ comprenant du nitrure de titane, d'épaisseur comprise entre 5 nanomètres et 35 nanomètres,
- un second module M₂ constitué par une couche à base d'un matériau diélectrique d'épaisseur *e₂* ou par un ensemble de couches à base de matériaux diélectriques d'épaisseur cumulée *e₂*,
- une seconde couche TN₂ comprenant du nitrure de titane, d'épaisseur comprise entre 5 nanomètres et 35 nanomètres,
- un troisième module M₃ constitué par une couche à base d'un matériau diélectrique d'épaisseur *e₃* ou par un ensemble de couches à base de matériaux diélectriques d'épaisseur cumulée *e₃,*
dans lequel la somme cumulée des épaisseurs des couches TN₁ et TN₂ comprenant du nitrure de titane est supérieure à 30 nm,
dans lequel *e₁* est inférieure à 30 nanomètres, *e₂* est compris entre 10 nm et 100 nm et *e₃* est supérieure à 10 nanomètres et inférieure ou égale à 65 nm, dans lequel le rapport des épaisseurs *e₁*/*e₃* est inférieur à 0,6.

2. Vitrage de véhicule ou de bâtiment selon la revendication 1, dans lequel l'épaisseur *e₂* du second module M₂ est comprise entre 20 nm et 65 nm bornes incluses.

3. Vitrage de véhicule ou de bâtiment selon l'une des revendications précédentes, dans lequel l'épaisseur *e₁* du premier module M₁ est comprise entre 1 nm et 25 nanomètres, bornes comprises.

4. Vitrage de véhicule ou de bâtiment selon l'une des revendications précédentes, dans lequel l'épaisseur *e₃* du troisième module M₃ est comprise entre 20 nm et 65 nanomètres, bornes comprises.

5. Vitrage de véhicule ou de bâtiment selon l'une des revendications précédentes, dans lequel l'épaisseur TN₁ de la première couche à base de nitrure de titane est comprise entre 10 nm et 30 nanomètres, bornes comprises.

6. Vitrage de véhicule ou de bâtiment selon l'une des revendications précédentes, dans lequel l'épaisseur TN₂ de la seconde couche à base de nitrure de titane est comprise entre 10 nm et 30 nanomètres, bornes comprises.

7. Vitrage de véhicule ou de bâtiment selon l'une des revendications précédentes, dans lequel le rapport des épaisseurs *e₁*/*e₃* est inférieur à 0,55.

8. Vitrage de véhicule ou de bâtiment selon l'une des revendications précédentes, dans lequel le revêtement ne contient pas de couche à base d'argent ou d'or.

9. Vitrage de véhicule ou de bâtiment selon l'une des revendications précédentes, dans lequel le ou les modules M₁, M₂ ou M₃ comprennent des matériaux choisis parmi un nitrure de silicium, un nitrure d'aluminium, un oxyde d'étain, un oxyde mixte de zinc et d'étain, un oxyde de silicium, un oxyde de titane, un oxynitrure de silicium.

10. Vitrage de véhicule ou de bâtiment selon l'une des revendications précédentes, dans lequel lesdits premier module, second module et troisième module comprennent tous une couche comprenant du nitrure de silicium et de préférence sont constituées par une seule couche comprenant du nitrure de silicium.

11. Vitrage de véhicule ou de bâtiment selon l'une des revendications précédentes, dans lequel M₁ et M₂ sont des couches uniques.

12. Vitrage de véhicule ou de bâtiment selon l'une des revendications précédentes, dans lequel M₁ et M₂ sont à base de nitrure de silicium.

13. Vitrage de véhicule ou de bâtiment selon l'une des revendications précédentes, dans lequel le substrat verrier est en verre clair.

14. Vitrage de véhicule ou de bâtiment selon l'une des revendications précédentes, dans lequel ledit revêtement comprend et de préférence est constitué par la succession de couches suivantes, à partir de la surface du substrat :
- une première couche M₁ à base de nitrure de silicium d'épaisseur *e₁* de préférence comprise entre 1 nm et 25 nm,
- une première couche comprenant du nitrure de titane, d'épaisseur comprise entre 10 nm et 30 nanomètres,
- une seconde couche M₂ à base de nitrure de silicium, d'épaisseur *e₂* comprise entre 20 nm et 65 nm,
- une seconde couche comprenant du nitrure de titane, d'épaisseur comprise entre 10 et 30 nanomètres,
- une troisième couche unique M₃ à base de nitrure de silicium d'épaisseur *e₃* supérieure à 10 nm, notamment comprise entre 20 nm et 65 nanomètres, ou un ensemble de couches diélectriques M₃, dont au moins une couche à base de nitrure de silicium d'épaisseur supérieure à 10 nm, notamment comprise entre 25 nanomètres et 60 nanomètres.

15. Vitrage de véhicule ou de bâtiment selon l'une des revendications précédentes, comprenant deux substrats verriers assemblés par un feuillet thermoplastique, ledit vitrage étant muni dudit empilement de couches, ledit empilement étant disposé de préférence sur la face d'un substrat tournée vers une surface extérieur dudit vitrage.

16. Vitrage de véhicule ou de bâtiment selon la revendication précédente, comprenant un premier substrat verrier, de préférence coloré dans sa masse, lié à un deuxième substrat par un feuillet thermoplastique intermédiaire, notamment en PVB, ledit deuxième substrat étant en verre clair et muni dudit empilement de couches disposé de préférence sur sa face exposée vers l'extérieur dudit article.

17. Vitrage de véhicule ou de bâtiment selon l'une des revendications précédentes, dans lequel le ou lesdits substrats verriers sont trempés ou bombés.

## Patentansprüche

1. Fahrzeug- oder Gebäudeverglasung mit Sonnenschutzeigenschaften, umfassend mindestens ein Glassubstrat, das mit einem Schichtenstapel versehen ist, wobei der Stapel aufeinanderfolgend von der Oberfläche des Substrats aus umfasst:
- ein erstes Modul M₁, das aus einer Schicht auf Basis eines dielektrischen Materials mit einer Dicke *e₁* oder aus einer Anordnung von Schichten auf Basis dielektrischer Materialien mit kumulativer Dicke *e₁* besteht,
- eine erste Schicht TN₁, umfassend Titannitrid, mit einer Dicke zwischen 5 Nanometern und 35 Nanometern,
- ein zweites Modul M₂, das aus einer Schicht auf Basis eines dielektrischen Materials mit einer Dicke *e₂* oder aus einer Anordnung von Schichten auf Basis dielektrischer Materialien mit kumulativer Dicke *e₂* besteht,
- eine zweite Schicht TN₂, umfassend Titannitrid, mit einer Dicke zwischen 5 Nanometern und 35 Nanometern,
- ein drittes Modul M₃, das aus einer Schicht auf Basis eines dielektrischen Materials mit einer Dicke *e₃* oder aus einer Anordnung von Schichten auf Basis dielektrischer Materialien mit kumulativer Dicke *e₃* besteht,
wobei die kumulative Summe der Dicken der Schichten TN₁ und TN₂, umfassend Titannitrid, größer als 30 nm ist,
wobei *e₁* kleiner als 30 Nanometer ist, *e₂* zwischen 10 nm und 100 nm beträgt und *e₃* größer als 10 Nanometer und kleiner als oder gleich 65 nm ist, wobei das Verhältnis der Dicken *e₁*/*e₃* kleiner als 0,6 ist.

2. Fahrzeug- oder Gebäudeverglasung nach Anspruch 1, wobei die Dicke *e₂* des zweiten Moduls M₂ zwischen 20 nm und 65 nm, einschließlich Grenzwerten, beträgt.

3. Fahrzeug- oder Gebäudeverglasung nach einem der vorstehenden Ansprüche, wobei die Dicke *e₁* des ersten Moduls M₁ zwischen 1 nm und 25 Nanometer, einschließlich Grenzwerten, beträgt.

4. Fahrzeug- oder Gebäudeverglasung nach einem der vorstehenden Ansprüche, wobei die Dicke *e₃* des dritten Moduls M₃ zwischen 20 nm und 65 Nanometer, einschließlich Grenzwerten, beträgt.

5. Fahrzeug- oder Gebäudeverglasung nach einem der vorstehenden Ansprüche, wobei die Dicke TN₁ der ersten Schicht auf Basis von Titannitrid zwischen 10 nm und 30 Nanometer, einschließlich Grenzwerten, beträgt.

6. Fahrzeug- oder Gebäudeverglasung nach einem der vorstehenden Ansprüche, wobei die Dicke TN₂ der zweiten Schicht auf Basis von Titannitrid zwischen 10 nm und 30 Nanometer, einschließlich Grenzwerten, beträgt.

7. Fahrzeug- oder Gebäudeverglasung nach einem der vorstehenden Ansprüche, wobei das Verhältnis der Dicken *e₁*/*e₃* kleiner als 0,55 ist.

8. Fahrzeug- oder Gebäudeverglasung nach einem der vorstehenden Ansprüche, wobei die Beschichtung keine Schicht auf Basis von Silber oder Gold enthält.

9. Fahrzeug- oder Gebäudeverglasung nach einem der vorstehenden Ansprüche, wobei das oder die Modul(e) M₁, M₂ oder M₃ Materialien umfassen, die aus Siliziumnitrid, Aluminiumnitrid, Zinnoxid, gemischtem Zink- und Zinnoxid, Siliziumoxid, Titanoxid, Siliziumoxynitrid ausgewählt sind.

10. Fahrzeug- oder Gebäudeverglasung nach einem der vorstehenden Ansprüche, wobei das erste Modul, das zweite Modul und das dritte Modul alle eine Schicht umfassen, umfassend Siliziumnitrid, und vorzugsweise aus einer einzigen Schicht, umfassend Siliziumnitrid, bestehen.

11. Fahrzeug- oder Gebäudeverglasung nach einem der vorstehenden Ansprüche, wobei M₁ und M₂ Einzelschichten sind.

12. Fahrzeug- oder Gebäudeverglasung nach einem der vorstehenden Ansprüche, wobei M₁ und M₂ auf Siliziumnitrid basieren.

13. Fahrzeug- oder Gebäudeverglasung nach einem der vorstehenden Ansprüche, wobei das Glassubstrat ein Klarglas ist.

14. Fahrzeug- oder Gebäudeverglasung nach einem der vorstehenden Ansprüche, wobei die Beschichtung die Abfolge der folgenden Schichten, ausgehend von der Oberfläche des Substrats, umfasst oder vorzugsweise aus dieser besteht:
- eine erste Schicht M₁ auf Basis von Siliziumnitrid mit einer Dicke *e₁*, die vorzugsweise zwischen 1 nm und 25 nm beträgt,
- eine erste Schicht, umfassend Titannitrid, mit einer Dicke zwischen 10 nm und 30 Nanometern,
- eine zweite Schicht M₂ auf Basis von Siliziumnitrid mit einer Dicke *e2*, die zwischen 20 nm und 65 nm beträgt,
- eine zweite Schicht, umfassend Titannitrid, mit einer Dicke, die zwischen 10 und 30 Nanometer beträgt,
- eine dritte Einzelschicht M₃ auf Basis von Siliziumnitrid mit einer Dicke *e₃,* die größer als 10 nm ist, insbesondere zwischen 20 nm und 65 Nanometer beträgt, oder eine Anordnung dielektrischer Schichten M₃, von denen mindestens eine Schicht auf Basis von Siliziumnitrid mit einer Dicke, die größer als 10 nm ist, insbesondere zwischen 25 Nanometern und 60 Nanometer beträgt.

15. Fahrzeug- oder Gebäudeverglasung nach einem der vorstehenden Ansprüche, umfassend zwei Glassubstrate, die durch eine thermoplastische Folie verbunden sind, wobei die Verglasung mit dem Schichtenstapel versehen ist, der Stapel vorzugsweise auf der Seite eines Substrats angeordnet ist, die einer Außenoberfläche der Verglasung zugewandt ist.

16. Fahrzeug- oder Gebäudeverglasung nach dem vorstehenden Anspruch, umfassend ein erstes Glassubstrat, vorzugsweise in seiner Masse gefärbt, das durch eine thermoplastische Zwischenfolie, insbesondere aus PVB, mit einem zweiten Substrat verbunden ist, wobei das zweite Substrat aus Klarglas besteht und mit dem Schichtenstapel versehen ist, der vorzugsweise auf seiner Fläche, die der Außenseite des Gegenstands zugewandt ist, angeordnet ist.

17. Fahrzeug- oder Gebäudeverglasung nach einem der vorstehenden Ansprüche, wobei das oder die Glassubstrat(e) gehärtet oder gekrümmt ist/sind.

## Claims

1. A vehicle or building glazing having solar control properties comprising at least one glass substrate provided with a stack of layers, in which the stack successively comprises, from the surface of said substrate:
- a first module M₁ consisting of a layer based on a dielectric material with a thickness *t₁* or of a set of layers based on dielectric materials with a cumulative thickness *t₁,*
- a first layer TN₁ comprising titanium nitride, with a thickness of between 5 nanometers and 35 nanometers,
- a second module M₂ consisting of a layer based on a dielectric material with a thickness *t₂* or of a set of layers based on dielectric materials with a cumulative thickness *t₂*,
- a second layer TN₂ comprising titanium nitride, with a thickness of between 5 nanometers and 35 nanometers,
- a third module M₃ consisting of a layer based on a dielectric material with a thickness *t₃* or of a set of layers based on dielectric materials with a cumulative thickness *t₃*,
in which the cumulative sum of the thicknesses of the TN₁ and TN₂ layers comprising titanium nitride is greater than 30 nm,
in which *t₁* is less than 30 nanometers, *t₂* is of between 10 nm and 100 nm and *t₃* is greater than 10 nanometers and lower or equal to 65 nm,
and in which the ratio of the thicknesses *t₁*/*f₃* is less than 0.6.

2. The vehicle or building glazing as claimed in claim 1, in which the thickness *t₂* of the second module M₂ is of between 20 nm and 65 nm, limits included.

3. The vehicle or building glazing as claimed in either of the preceding claims, in which the thickness *t₁* of the first module M₁ is of between 1 nm and 25 nanometers, limits included.

4. The vehicle or building glazing as claimed in one of the preceding claims, in which the thickness *t₃* of the third module M₃ is of between 20 nm and 65 nanometers, limits included.

5. The vehicle or building glazing as claimed in one of the preceding claims, in which the thickness TN₁ of the first layer based on titanium nitride is of between 10 nm and 30 nanometers, limits included.

6. The vehicle or building glazing as claimed in one of the preceding claims, in which the thickness TN₂ of the second layer based on titanium nitride is of between 10 nm and 30 nanometers, limits included.

7. The vehicle or building glazing as claimed in one of the preceding claims, in which the ratio of the thicknesses *t₁*/*f₃* is less than 0.55.

8. The vehicle or building glazing as claimed in one of the preceding claims, in which the coating does not contain a layer based on silver or on gold.

9. The vehicle or building glazing as claimed in one of the preceding claims, in which the module(s) M₁, M₂ or M₃ comprise materials chosen from a silicon nitride, an aluminum nitride, a tin oxide, a mixed zinc tin oxide, a silicon oxide, a titanium oxide or a silicon oxynitride.

10. The vehicle or building glazing as claimed in one of the preceding claims, in which said first module, said second module and said third module all comprise a layer comprising silicon nitride and preferably consist of a single layer comprising silicon nitride.

11. The vehicle or building glazing as claimed in one of the preceding claims, in which M₁ and M₂ are single layers.

12. The vehicle or building glazing as claimed in one of the preceding claims, in which M₁ and M₂ are based on silicon nitride.

13. The vehicle or building glazing as claimed in one of the preceding claims, in which the glass substrate is made of clear glass.

14. The vehicle or building glazing as claimed in one of the preceding claims, in which said coating comprises and preferably consists of the sequence of following layers, starting from the surface of the substrate:
- a first layer M₁ based on silicon nitride, with a thickness *t₁* preferably of between 1 nm and 25 nm,
- a first layer comprising titanium nitride, with a thickness of between 10 nm and 30 nanometers,
- a second layer M₂ based on silicon nitride, with a thickness *t₂* of between 20 nm and 65 nm,
- a second layer comprising titanium nitride, with a thickness of between 10 and 30 nanometers,
- a third single layer M₃ based on silicon nitride, with a thickness *t₃* of greater than 10 nm, in particular of between 20 nm and 65 nanometers, or a set of dielectric layers M₃, including at least one layer based on silicon nitride with a thickness of greater than 10 nm, in particular of between 25 nanometers and 60 nanometers.

15. The vehicle or building glazing as claimed in one of the preceding claims, comprising two glass substrates assembled by a thermoplastic sheet, said glazing being provided with said stack of layers, said stack preferably being positioned on the face of a substrate facing an exterior surface of said glazing.

16. The vehicle or building glazing as claimed in the preceding claim, comprising a first glass substrate, preferably colored in its bulk, bonded to a second substrate by an intermediate thermoplastic sheet, in particular made of PVB, said second substrate being made of clear glass and provided with said stack of layers preferably positioned on its face exposed toward the outside of said article.

17. The vehicle or building glazing as claimed in one of the preceding claims, in which said glass substrate(s) are tempered or bent.
